Europäisches Patentamt

European Patent Office

Office européen des brevets

(11) Publication number: **0 213 204**
A1

## EUROPEAN PATENT APPLICATION
published in accordance with Art. 158(3) EPC

(21) Application number: **85902645.2**

(22) Date of filing: **24.05.85**

Data of the international application taken as a basis:

(86) International application number:
**PCT/JP85/00287**

(87) International publication number:
**WO85/05250 (05.12.85 85/26)**

(51) Int. Cl.⁴: **A 23 J 3/00**
**A 23 P 1/12**
**//A23L1/325**

(30) Priority: **24.05.84 JP 105593/84**
**08.02.85 JP 21799/85**
**12.03.85 JP 47354/85**
**18.03.85 JP 52530/85**

(43) Date of publication of application:
**11.03.87 Bulletin 87/11**

(84) Designated Contracting States:
**DE FR GB IT NL**

(71) Applicant: **MITSUBISHI JUKOGYO KABUSHIKI KAISHA**
**5-1, Marunouchi 2-chome Chiyoda-ku**
**Tokyo(JP)**

(72) Inventor: **WAKAMIYA, S. Nagoya Machinery Works**
**Mitsubishi**
**Jukogyo K.K. 1,Aza-Takamichi Iwatsukacho Nakamura**
**ku Nagoya City Aichi Pref.453(JP)**

(72) Inventor: **FUJIOKA, Y. Nagoya Machinery Works**
**Mitsubishi**
**Jukogyo K.K. 1,Aza-Takamichi Iwatsukacho Nakamura**
**ku Nagoya City Aichi Pref.453(JP)**

(74) Representative: **Meissner, Peter E., Dipl.-Ing. et al,**
**Herbertstrasse 22 ·**
**D-1000 Berlin 33(DE)**

(54) **DIE FOR EXTRUDERS.**

(57) Dies for an extruder used for the processing of food, and more particularly to dies for an extruder used to obtain continuously organized meat-like formed products by using raw protein materials for foods, such as defatted soy bean powder and meat of a high moisture content of livestock. These dies formed so as to obtain such a product are characterized primarily by the hole in the die, which is 15-40 times as long as the diameter or thickness thereof, and secondly by plates having a plurality of small holes provided at the inlet portion of the hole in the die.

FIG.1

SPECIFICATION

DIE FOR EXTRUDER

FIELD OF THE INVENTION

The present invention relates to a die for an extruder, and more particularly to a die for an extruder for producing a meat-like continuous organized and shaped food product from the protein starting materials such as a defatted soybean powder, a high water content animal meat and the like.

BACKGROUND OF THE INVENTION

A food processing has a long history, which processing appears in a document published in the second half of 1800. At the beginning of its history, the extruder is used to conduct a dehydration process or a juicing process of the foods. Then, an application field of such extruder is gradually broadened to a processing/shaping area of the foods, in which area the food starting materials are thrown into a screw portion of the extruder so that such materials are kneaded and heated while transferred forward, whereby the food starting materials are extruded from the die of the extruder into a final food product having an individual shape.

The extruder is substantially classified into two types, one of which is one shaft type and the other of which is two shaft type. The two shaft type of the extruder is further classified into several sub-types with respect to its its meshing manner and rotational directions of two screws.

Hitherto, it has been considered the extruder merely as a machine for conducting a compressing, a kneading, an expanding and a bulking processes of the food starting materials. However, now, the extruder is considered as a remarkable means for positively conducting a mixing/kneading, a shearing, a fusing, a sterilizing, a chemical reacting, a bulking, a shaping and the like processes.

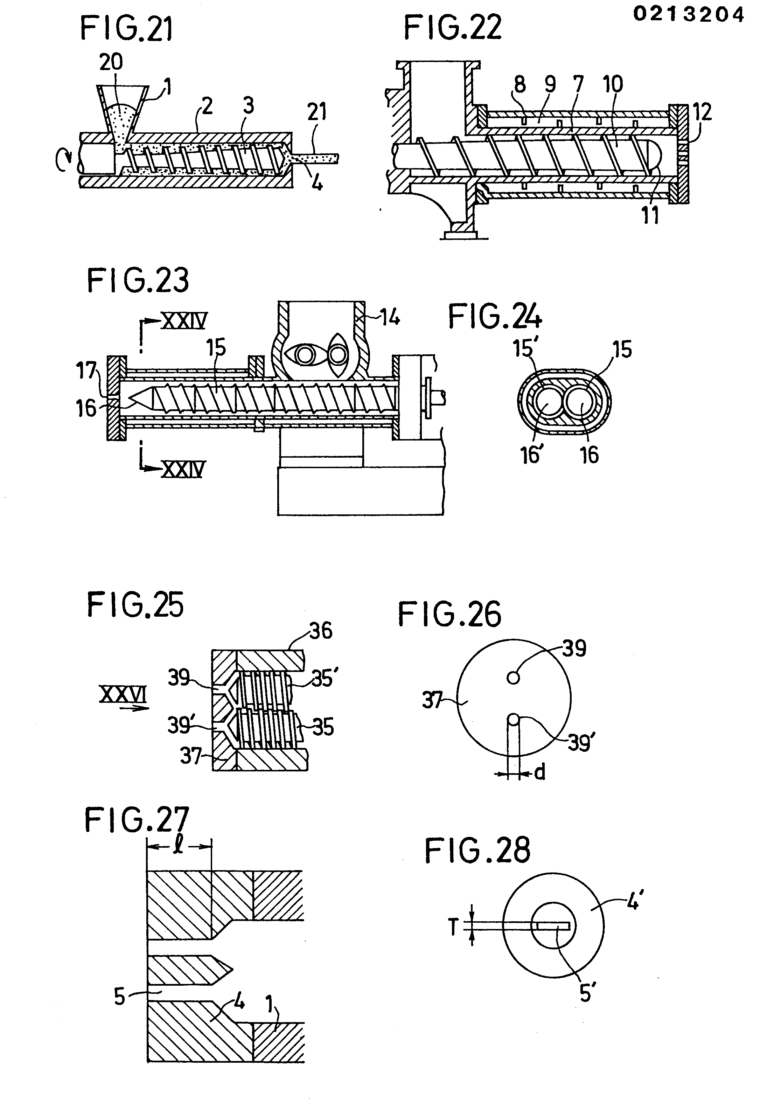

A conventional extruder is shown in Figs. 21 to 28. The simplest type of the conventional extruder is shown in Fig. 21, wherein: the reference numeral 1 designates a hopper for feeding the food starting materials, i.e., raw materials 20 to a screw 3 which is rotated by a suitable driving unit (not shown) so that the raw materials 20 are transferred to an opening of a die 4 through a barrel 2 by means of the screw 3 while mixed, kneaded and fused. The raw materials 20 are fused together under the effect of self-heating caused in the mixing/kneading, and the shearing processes of the raw materials 20 conducted by the screw 3 or under the effect of an outer heating conducted by a barrel heater (not shown). Then, the thus processed raw materials 20 are extruded from the opening of the die 4 into an extruded product 21. Incidentally, a front end 3´ of the screw 3 has a conical shape.

The extruder shown in Fig. 22 is provided with a temperature controlling jacket 8 which has a fluid passage 9 in an outer periphery of the barrel 7 so that a temperature of the barrel 7 is controlled by the fluid flowing therein, the temperature of which fluid is controlled in the jacket 8. Incidentally, in Fig. 22: the reference numeral 10 designates a screw; the numeral 12 designates a plurality of openings provided in the die; the numeral 11 designates a front end portion of the screw 10, which front end portion 11 is formed into a semi-spherical shape.

In Figs. 23 and 24, there is shown a two shaft type of the extruder which is provided with a hopper 14 for forcibly feeding the raw materials, which extruder is also provided with a pair of screws 15, 15´ meshing with each other. The reference numerals 16 and 16´ designate front end portions of the screws 15 ans 15´, respectively, each of which front end portions 16 and 16´ is formed into a conical shape. Incidentally, in Fig. 23, the reference numeral 17 designates an opening of the die.

In Figs. 25 and 26, there is shown another two shaft type of the extruder provided with two die openings 39 and 39´, in which extruder: the reference numerals 35 and 35´ designate screws meshing with each other; the numeral 36 designates a barrel; the numeral 37 designates a die which is provided with the two die openings 39 and 39´.

Incidentally, in case of a slit die 4´ as shown in Fig. 28, such die 4´ is provided with a die opening 5´ having a rectangular shape. Incidentally, the reference character $\ell$ shown in Fig. 27 designates a "length of the die openings"; the character d shown in Fig. 26 designates a "diameter of the die opening"; and the character T shown in Fig. 28 designates a "thickness of the die opening".

In the conventional die 4 (or 4´ and the like), the length $\ell$ of the die opening is up to a length of 10 times as long as the diameter d or the thickness T of the die opening (hereinafter referred to as the diameter d of the die opening for simplifying the description).

The reason why the length $\ell$ of the die opening is up to 10 times as long as the diameter d of the die opening is in that, hitherto, the foods such as a snack and the like which are easy in shaping and are processed by the extruder are mainly made from a starch starting material so that it is possible to shape such foods easily and to produce such foods as continuous products even if the length $\ell$ of the die opening is short or that there is originally no need for producing the continuous products so as to produce granulated products.

However, recently, it has been tried to produce a meat-like continuous product, or to perform an extrusion process of a high water content food starting materials with the use of a good property of the two shaft type of the extruder in its transferring ability of the materials.

In this case, when a die a length $\ell$ of a die opening of which is up to a length of 10 times as long as a diameter d of the die opening is used in a processing of the food made from the defatted soybean powder, it is impossible to produce a final product in a continuous shape, which final product is extruded from the die into a granulated shape.

In case of the high water content raw materials, a processing temperature thereof often exceeds a boiling point of water. In such a case, the raw materials are ejected from the die under the effect of the steam pressure to make it impossible to produce a continuous product so that the product is broken in its organized structure to lose a water trapped in such organized structure of the product.

Further, in the conventional extruder, the raw materials are kneaded by the screw to be fused together so that the thus fused raw materials are extruded from the die while subjected to various reactions. In this time, in the conventional extruder, since the raw materials are extruded from the die after they are controlled in their kneading rate and reaction rate by changing a rotational speed of the screw, a barrel temperature, a feeding amount of the raw materials and the like, there is no wide variation in the flowing speed of the raw materials after they pass through the screw. However, in some types of the conventional extruders, the flowing speed of the raw materials in an outlet of the die is considerably increased relative to that of the raw materials between the barrel and the die.

The reason why the flowing speed of the raw materials in the outlet of the die is considerably increased relative to that of the raw materials between the barrel and the die is in that it is intended to bulk out the food product such as the snack and the like made from the starch starting materials, in the outlet of the die, which food product has been processed in the extruder, or in that it is intended to organize the structure of the food product made from the protein starting material in flake-like manner.

However, in such construction of the conventional extruder, in case that is is required to produce a fibriform continuous meat-like product from a vegetable protein such as the defatted soybean powder and "Okara" which is a residue of the Japanese traditional soybean cake "Tofu" and from an animal protein such as a marine beef and a scrap meat, such requirement can not be satisfied since it is not possible to obtain a product having a sufficient fibriform structure and a sufficient strength in its binding force. This is one of problems inherent in the conventional extruder.

It is the first object of the present invention to provide a die for an extruder which may produce a continuous meat-like organized protein product, in which extruder the raw materials such as the defatted soybean powder and the high water content scrap meat are subjected to a sufficient organizing action when they pass through the die opening.

It is the second object of the present invention to provide a die for an extruder which may extrude and shape a continuous meat-like product having a sufficient strength in a binding force of its structure, in which extruder the raw materials are oriented in their flowing direction so that the raw materials are formed into a strong fibriform structure.

<u>SUMMARY OF THE INVENTION</u>

According to the present invention, in a die for an extruder comprises: a sleeve-like cylinder barrel; a screw rotatably provided in the barrel; and the die having the die opening provided in a front end of the barrel, a length of the die opening is 15 to 40 times as long as the thickness of the die opening, whereby the raw materials such as the defatted soybean powder and the like are subjected to various stractural actions caused by rotation of the screw while subjected to the kneading, fusing and heating actions when they pass through a long die opening, in which heating action the raw materials change in property, so that the raw materials are formed into a continuous meat-like product when they are extruded from the die.

Also, according to the present invention, in the extruder of the present invention, a porous plate in which a large number of small openings are provided in an entrance portion of the die opening is provided in a direction perpendicular to an axis of the screw, so that it is possible to impart an intensive shearing action to the raw materials to orient the sames in their flowing direction, whereby it is possible to make a continuous fibriform meat-like product from a main raw materials such as the defatted soybean powder, the above-mentioned "Okara", the marine beef and the like when they are extruded from the die.

### BRIEF DESCRIPTION OF THE DRAWINGS

Fig. 1 is an outline of a longitudinal sectional view of a die of an example of a first embodiment of the present invention;

Fig. 2 is an outline of a longitudinal sectional view of a die of an example of a second embodiment of the present invention;

Fig. 3 is a front view of a porous plate shown in Fig. 2;

Fig. 4 is an enlarged view of a small opening portion of the porous plate shown in Fig. 2;

Fig. 5 is an outline of a longitudinal sectional view of a die of a second example of the second embodiment of the present invention;

Fig. 6 is a front view of another example of the porous plate;

Fig. 7 is an outline of a longitudinal sectional view of a die of a third example of the second embodiment of the present invention;

Fig. 8 is a partial sectional enlarged view of the porous plate shown in Fig.7;

Fig. 9 is a front view of the porous plate shown in Fig. 8;

Fig. 10 f, g, h and j are flowing speed distribution diagrams of the raw materials, taken along the lines F-F, G-G, H-H and J-J in Fig. 7, respectively;

Fig. 11 is an outline of a longitudinal view of a die of a fourth example of the second embodiment of the present invention;

Fig. 12 is a front view of another example of the porous plate;

Fig. 13 is an outline of a longitudinal sectional view of a die of a fifth example of the second embodiment of the present invention;

Fig. 14 is a front view taken along the line XIV-XIV in Fig. 13;

Fig. 15 is an enlarged sectional view of the small opening of the porous plate shown in Fig. 13;

Figs. 16 and 17 are longitudinal sectional views of other examples of the porous plate;

Figs. 18 o, p, q and r are flowing speed distribution diagrams of the raw materials, taken along the lines O-O, P-P, Q-Q and R-R in Fig. 13, respectively;

Fig. 19 is an outline of a longitudinal sectional view of the die of the fifth example of the second embodiment of the present invention;

Fig. 20 is a front view of a further another example of the porous plate;

Figs. 21 and 22 are longitudinal sectional side views of examples of the conventional one shaft type extruder;

Fig. 23 is a longitudinal sectional side view of an example of the conventional two shaft type extruder;

Fig. 24 is a front view taken along the line XXIV-XXIV in Fig. 23, viewed in an arrow direction therein;

Fig. 25 is a longitudinal sectional side view of a die of another example of the conventional two shaft type extruder;

Fig. 26 is a front view viewed in an arrow direction XXVI in Fig. 25;

Fig. 27 is an enlarged sectional view of the die shown in Fig. 25; and

Fig. 28 is a front view of a slit die.

## DESCRIPTION OF THE PREFERRED EMBODIMENTS

The present invention will be hereinbelow described in detail with reference to the accompanying drawings:

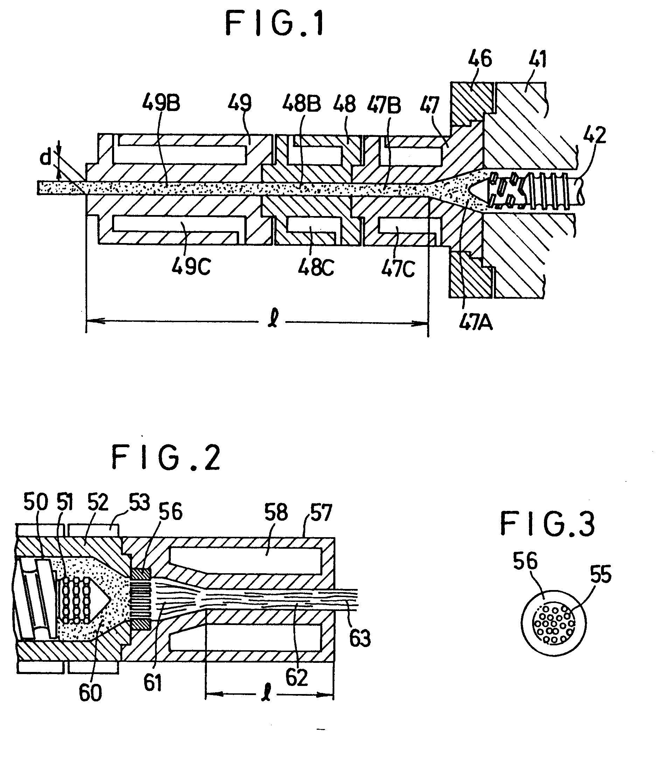

Fig. 1 shows a die of an example of a first embodiment of the present invention, which die comprises three portions, i.e., a die 47 fixed to a cylinder barrel through a die holder 46; a die 48 connected to the die 47; and a die 49 connected to the die 47 through the die 48. In the die 47 are provided a taper hole 47A and a cylindrical die opening 47B connected to the taper hole 47A which is connected to a hole of the cylinder barrel in which the screw 42 is inserted, which taper hole 47A is gradually decreased in its cross section toward the cylindrical die opening 47B. The dies 48 and 49 are provided with die openings 48B and 49B respectively, each of which open-

-11-

ings 48B and 49B has the same diameter d as that of the die opening 47B and is aligned therewith in a straight line.

Further, the dies 47, 48 and 49 are provided with jackets 47C, 48C and 49C respectively, in which jackets 47C, 48C and 49C flows a fluid a temperature of which is set at a predetermined value. Incidentally, the total length of the die openings 47B, 48B and 49B is designated by the reference character "$\ell$".

In operation, the raw materials fed from a feeding source thereof (not shown) to the barrel 41 are transferred to the die 47 while subjected to a compressing, a mixing, a fusing and a heating actions, in which heating action the raw materials are changed in their properties. During their transferring through the die openings 47B, 48B and 49B of the dies 47, 48 and 49, the raw materials react to each other to be organized so that the thus organized raw materials are formed into a continuous meat-like food which is then transferred to a front end of the 49 in which such food is cooled and shaped into a final extruded product after it is extruded from the die 49.

In the above reactions of the raw materials , since such reactions require a relatively long reaction time and since the thus organized structure of the raw materials is broken when the cross-sectional shapes of the

-12-

die openings 47B, 48B and 49B are changed in a reaction zone of the raw materials, it is necessary to the cross-sectional shapes of the die openings 47B, 48B and 49B substantially coincident with each other in such reaction zone from a portion where the reaction of the raw materials is started to the outlet of the die 49.

Namely, while the raw materials are transferred through the die openings 47B, 48B and 49B, the above-mentioned reacting, cooling and forming actions of the raw materials are conducted. Therefore, the length $\ell$ is considerably long relative to the diameter d of the die opening.

The inventor of the present invention has manufactured various types of the dies by way of trial to have conducted various experiments with the use of such dies, whereby he has found a fact that, in case of an extrusion processing of the defatted soybean powder as a raw material for producing the meat-like organized food product, a good food product can be obtained with the use of the die having a die opening a length $\ell$ of which is at least 20 times as long as the diameter d of the die opening, most preferably 35 times as long as the diameter d of the die opening, while a suitable temperature around the outlet of the die is 70 °C.

At this time, since it is preferable to change

-13-

the length $\ell$ of the die opening according to the water content ratio of the food raw materials employed, it is preferable to employ an assembly type of the die comprising a plurality of dies as shown in the embodiment of the present invention so as to make the length $\ell$ of the die opening adjustable.

The above is the description of the first embodiment of the present invention. Now, a second embodiment of the present invention will be hereinbelow described: Figs. 2 to 4 show a first example of the second embodiment of the present invention, wherein: the reference numeral 50 designates a screw; the numeral 51 designates a torpedo; the numeral 52 designates a barrel; the numeral 53 designates a heater for heating the barrel 52; the numeral 55 designates a plurality of small openings for orienting the raw materials; the numeral 56 designates a porous plate provided with the small openings 55; the numeral 57 designates a die; the numeral 58 designates a jacket for receiving a temperature controlling medium; the numeral 60 designates raw materials immediately after they passed through the screw 50; the numeral 61 designates raw materials immediately after they passed through the small openings 55; the numeral 62 designates raw materials passing through a forming portion ( indicated by the reference character $\ell$ ) of the die 57; and the numeral 63 designates an extruded food product ( a shaped product).

In such extruder, the food raw materials fed to a feeding portion (not shown) of the screw 50 are compressed, mixed and kneaded between the screw 50 and the barrel 52 under the action of the screw 50 and then are stirred by the torpedo 51 provided in the front end portion of the screw 50 to be transferred to a front area of the barrel 52 in which the raw materials are designated by the reference numeral 60. The barrel 52 is heated by the heater 53 to be controlled in its temperature by the same 53. In some cases, it is necessary to cool the raw materials so as to control its temperature with the use of a suitable cooling unit in place of the heater 53, which is dependent on the properties of the raw materials.

If a starch starting materials are used as the raw materials, such raw materials under the condition designated by the reference numeral 60 are already fused together into a final product condition so that it is possible to form such raw materials into the final product easily, or it is possible to bulk out such raw materials at the outlet of the die to produce the extruded final product. Consequently, in this case, it is not necessary to provide the plurality of the small openings for orienting the raw materials in the die.

In contrast with this, in case that it is required to produce a fibriform meat-like organized protein food product from the raw materials such as the defatted soybean powder, the above-mentioned "Okara", the animal proteins such as the marine beef and the scrap meat, it is not possible to impart a strong fiber-like property to the raw materials even if the raw materials under the condition 60 are extruded from the die. Namely, in this case, only a poor fiber-like property, which is produced in the raw materials when they are subjected to shearing and transferring actions caused by the screw 50, the torpedo 51 and the barrel 52 while the raw materials flow, is imparted to the food product. The raw materials are oriented when they pass through the die. However, such orientation of the raw materials do not give the food product a sufficient fiber-like property.

The raw materials 60 existing in the front end portion of the barrel 52 is in a condition in which the protein molecules of the raw materials bring their reactive elements to the surfaces thereof of some extent through the kneading process of the raw materials conducted by the screw 50 etc., so that the raw materials are fused together while such protein molecules are in a condition in which they are not reacted together. Under such condition, when the raw materials are passed through the small openings 55 of the porous plate 56 of the present invention, the protein molecules of the raw materials are subjected to the shearing action to be oriented in the flowing direction of the raw materials. Under the effect of such orientation of the protein molecules of the raw materials, the protein molecules bring further more amount of their reactive elements to the surfaces thereof in a condition designated by the reference numeral 61. In this condition 61, the raw materials are introduced into the forming portion ( the length of which is designated by the reference character $\ell$) of the die 57 to be reacted and shaped so as to be oriented so that the fiber-like property is imparted to the extruded food product, while such extruded food product has a strong meat-like structure which is provided by organized bindings of the protein molecules based on the large amount of their exposed reactive elements.

According to the properties of the food raw materials and the intended extruded product, it is necessary to change the small openings 55 in their shapes, sizes and numbers, wherein it is preferable to make each of the small openings 55 smaller in its diameter, longer in its length and to increase the numbers of the small openings 55 to the extent that the pressure drop across such small openings 55 enables the food product to be extruded.

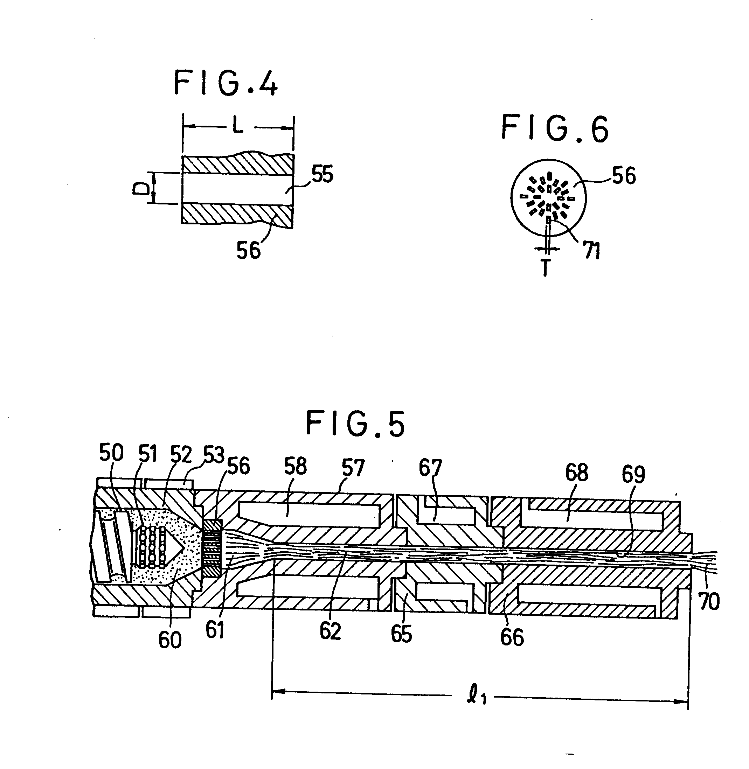

As shown in Fig. 4, according to the experiments conducted by the inventor of the present invention, in case that the defatted soybean powder is used as a raw material, it is found that it is preferable to use the small opening 55 for orientation use, which small opening 55 has a ratio (L/D) of the diameter D of the small opening 55 to the length L of the small opening 55 within a range of from 3 to 20 so as to keep an average flowing speed of the raw materials within a range of from 3 to 10 cm/sec.

Incidentally, as shown in Fig. 2, the die 57 has a construction in which the porous plate 56 provided with the small openings 55 for orientation use is incorporated. However, it is also possible to provide these small openings 55 in the barrel 52.

Further1, in Fig. 2, one shaft type extruder having one screw 50 is employed as the example of the present invention. However, it is also possible to employ the two shaft type extruder having two screws.

Further, the shape of the small opening 55 for orientation use is not limited to a cylindrical shape only.

As shown in Fig. 5, in a second example of the second embodiment of the present invention: the reference numerals 65, 66 designate dies; the numeral 67, 68 designate jackets; the reference character $\ell_1$ designates a length of a forming portion of the dies, which length $\ell_1$ is 15 to

-18-

40 times as long as the diameter of the die opening 69.

In such extruder, the raw materials in which the protein molecules are in a condition 61 are subjected to a complete reacting and forming processes for a longer period of time than that in the case of the first example of the present invention while the raw materials pass through the forming portion  of the dies, so that a strongly organized meat-like product 70, in which the orientation of the protein molecules is enhanced relative to the above first example of the present invention, is extruded.

In the above example of the present invention, the small opening 55 may also have other shapes in addition to the cylindrical shape, for example, as shown in Fig. 6, a slit-like shape a gap of which is hereinafter referred to as a thickness T. In this case, the small opening forms a slit 71.

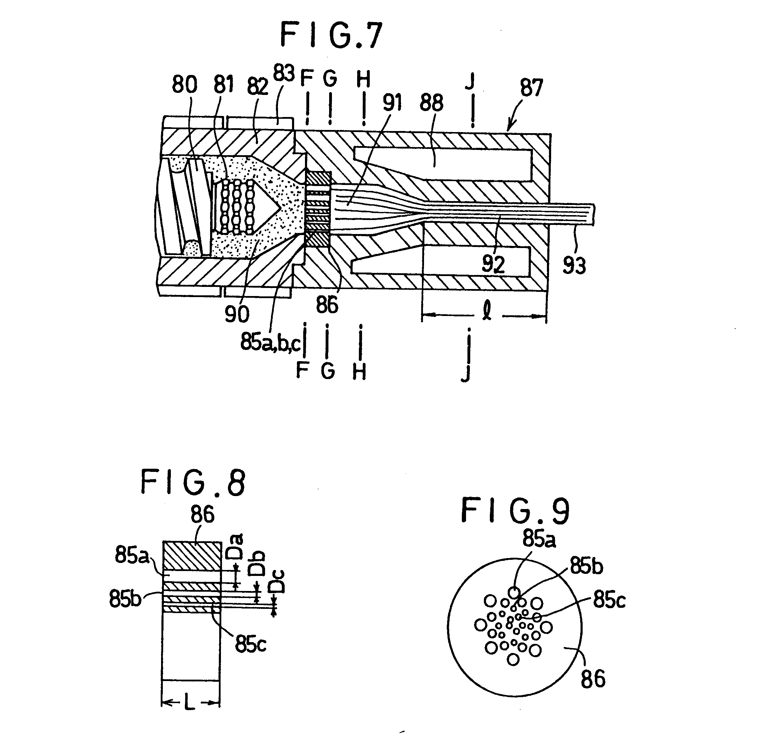

Next, a third example of the second embodiment of the present invention will be hereinbelow described. Figs. 7 to 9 show such third example, wherein: the reference numeral 80 designates a screw; the numeral 81 designates a torpedo; the numeral 82 designates a barrel; the numeral 83 designates a heater for heating the barrel_82; the numerals 85a, 85b and 85c designate a plurality small openings for orienting the raw materials, which small openings

-19-

85a, 85b and 85c vary in their diameters; the numeral 86 designates a porous plate provided with the small openings 85a, 85b and 85c; the numeral 87 designates a die; the numeral 88 designates a jacket for receiving a die temperature controlling medium; the numeral 90 designates raw materials immediately after they passed through the screw 80; the numeral 91 designates raw materials immediately after they passed through the small openings 85a, 85b and 85c; the numeral 92 designates raw materials passing through the forming portion of the dies, which forming portion is designated by the reference character ; the numeral 93 designates an extruded food product ( a shaped product).

In such extruder, the food raw materials fed to the raw material feeding portion (not shown) of the screw 80 are compressed, mixed and kneaded between the screw 80 and the barrel 82 under the action of the screw 80 and then are stirred by the torpedo 81 provided in the front end portion of the screw 80 to be transferred to a front area of the barrel 82 in which the raw materials are designated by the reference numeral 90. The barrel 82 is heated by the heater 83 to be controlled in its temperature by the same 83. In some cases, it is necessary to cool the raw materials so as to control their temperature with the use of a suitable cooling unit in place of the heater 83, which is dependent on the properties of the raw materials.

If the starch starting materials are used as the raw materials, such raw materials under the condition designated by the reference numeral 90 are already fused together so that it is possible to cool and solidify such raw materials in the die portion, or to bulk out such raw materials in the outlet of the die in some food products, whereby the final food product can be extruded from the die. Consequently, in this case, it is not necessary to provide the small openings 85a, 85b and 85c for orienting the raw materials.

In contrast with this, in case that it is required to produce a fibriform meat-like organized protein food product from the raw materials, for example, from the vegetable proteins such as the defatted soybean powder and the above-mentioned "Okara", and the animal proteins such as the marine beef and the scrap meat, it is not possible to impart a strong fiber-like property to the raw materials even if the raw materials under the condition 90 are extruded from the die.

In consideration of the above fact, in the extruder of the present invention, the raw materials 90 existing in the front area of the barrel 82 have been kneaded by the screw so that the protein molecules of the raw ma-

-21-

terials bring their reactive elements to the surfaces of the protein molecules while these protein molecules are put in a condition in which they are fused together in an unreacted manner. In this condition, when the raw materials are passed through the small openings 85a, 85b and 85c, the protein molecules of the raw materials are subjected to the shearing action caused by a high flowing speed of the raw materials so that these protein molecules are oriented in the flowing direction of the raw materials. Under the effect of this orientation of the protein molecules of the raw materials, the protein molecules bring further more amount of their reactive elements to the surfaces thereof in a condition designated by the reference numeral 91. In this condition, the raw materials are introduced into the forming portion ( the length of which is designated by the reference character $\ell$ ) of the die 87 to be reacted on each other and shaped so as to be oriented so that the fiber-like property is imparted to the extruded food product, while such extruded food product has a strong meat-like structure which is provided by organized bindings of the protein molecules based on the large amount of their exposed reactive elements.

According to the properties of the raw materials and the intended extruded product, it is necessary to change the small openings 85a, 85b and 85c in their shapes, sizes and numbers, wherein it is preferable to make each of the small openings 85a, 85b and 85c smaller in its diameter, longer in its length and to increase the numbers of the small openings 85a, 85b and 85c to the extent that the pressure drop across such small openings 85a, 85b and 85c enables the food product to be extruded.

As shown in Fig. 8, according to the experiments conducted by the inventor of the present invention, in case that the defatted soybean powder is used as a raw material, it is found that it is preferable to use the small openings 85a, 85b and 85c for orientation use, each of which small openings 85a, 85b and 85c has a ratio (L/D) of its diameter D to its length L within a range of from 3 to 20 so as to keep an average flowing speed of the raw materials within a range of from 3 to 10 cm/sec.

Incidentally, as shown in Fig. 7, the die 87 has a construction in which the porous plate 86 provided with the small openings 85a, 85b and 85c for orientation use is incorporated. However, it is also possible to provide these small openings 85a, 85b and 85c in the barrel 82.

Further, in Fig. 7, one shaft type extruder having one screw 80 is employed as the example of the present invention. However, it is also possible to employ the two shaft type extruder having two screws in the present invention.

Further, the shapes of the small openings 85a, 85b and 85c are not limited to the cylindrical shapes only.

On the other hand, the flowing speed of the raw materials in the die is generally fastest in a cetral portion of a cross section of such flow and is gradually decreased toward a wall surface of the die, so that a difference in the flowing speed is produced between the flowing speed in the central portion and that near the wall surface of the die. Such difference in the flowing speed increases when a flowing resistance between the flow of the raw materials and the wall surface of the die. In the conventional die of the extruder, once organized proteins of the raw materials in the die are subjected to an exfoliating action in the flowing direction thereof, which exfoliating action is caused by such difference in the flowing speed, so that their once organized structure is broken, whereby they are extruded from the outlet of the die in a condition in which their structure has been torn.

The present invention also provides a means for preventing such exfoliating action from occurring, i.e., for preventing the structure of the product from being broken.

Namely, in order to prevent the structure of the product from being broken, it is necessary to decrease the difference of the flowing speed of the raw materials

-24-

in the cross section of the die.

According to the present invention, such difference in the flowing speed of the raw materials is decreased by varying a size of the cross-sectional area of each of the small openings 85a, 85b and 85c for orientation use.

For example, as shown in Figs. 8 and 9, the diameters Dc, Db and Da of the small openings 85c, 85b and 85a are gradually increased from a central portion of the porous plate 86 to a periphery of the same 86, in which porous plate 86 are provided the small openings 85c, 85b and 85a. In this case, the length L of each of the small openings 85c, 85b and 85a is fixed. Namely, the diameter of each of the small openings 85c disposed in the central portion of the cross-sectional area of the die is relatively small, while the diameter of each of the small openings 85a disposed near the periphery of the porous plate 86 is relatively large.

In general, a flowing speed of a fluid decreases when a flowing resistance increases. Since the flowing resistance is produced by a friction (in a broad sense) between the fluid and a wall surface of the fluid passage, the flowing resistance increases when the cross-sectional area, i.e., the diameter of the fluid passage decreases, provided that both the length and the shape (for example, a circular shape in this case) of the fluid passage are

-25-

fixed. In other words, the flowing speed in the outlet of each of the small openings 85a, 85b and 85c decreases when the diameter of each of the small openings 85a, 85b and 85c decreases.

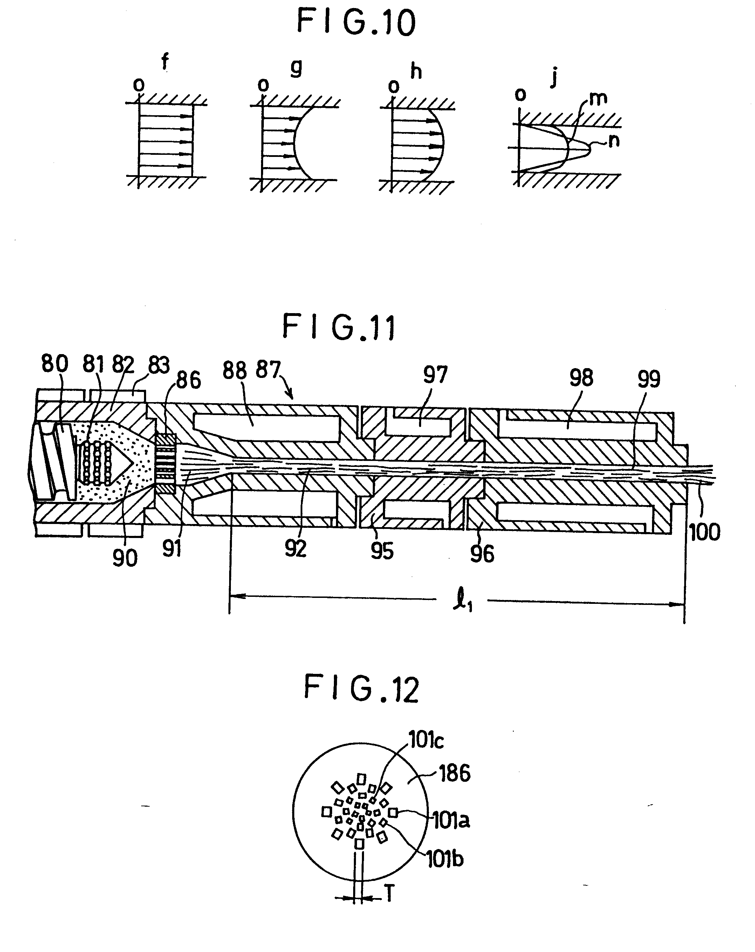

The flowing speed distribution diagrams of the raw materials in the cross sections F-F, G-G, H-H and J-J in Fig. 7 are shown in Figs. 10 f, g, h and j, respectively.

In the cross section F-F, the raw materials flow into the small openings 85a, 85b and 85c in a condition that there is substantially no difference in the flowing speed between the central portion and the peripheral portion of the flowing passage of the raw materials. However, in the outlet of the small openings 85a, 85b and 85c, i.e., in the cross section G-G, since the diameter of the small opening 85c disposed in the central portion is smaller than that of the small opening 85a disposed in the peripheral portion, the flowing speed of the raw materials decreases in the central portion because the above-mentioned reason, whereby a flowing speed distrubution of the raw materials as shown in Fig. 10g is produced. Under the effect of such flowing speed distribution in Fig. 10g, it is possible to smooth the flowing speed distribution in the cross section J-J in which the difference in the flowing speed is considerably decreased, because the flowing speed of the raw materials near the wall surface of the flowing passage decreases due to the flowing resistance between the raw materials and such wall surface, which flowing resistance acts on the raw materials between the cross sections H-H and J-J, so that the difference in the flowing speed of the raw materials decreases. The conventional flowing speed distribution n of the raw materials in the cross section J-J is shown in Fig.10j in which the flowing speed distribution m of the raw materials is obtained according to the construction of the present invention. The shapes of the small openings 85a, 85b and 85c are not limited to a circular shape only, for example, a rectangular shape is also applicable to such use. In case that the rectangle-shaped small openings are employed, it is possible to change an amount of the flowing resistance by changing the size of the cross section of the small openings, for example, by changing a length of each side of the rectangle. Namely, according to the present invention, it is intended that the flowing speed distribution in the die is changed by suitably arranging the small opening for orientation use, which small openings vary in their cross sectional shapes and sizes.

Fig. 11 shows a fourth example of the second embodiment of the present invention, wherein: the reference numerals 95, 96 designate dies; the numerals 97, 98 designate temperature controlling jackets; and the reference

character $\ell_1$ designates a length of a forming portion of the dies, which length $\ell_1$ is 15 to 40 times as long as the diameter of the die opening 99.

In comparison with the first embodiment of the present invention, the protein molecules of the raw materials in a condition 91 are fully reacted and shaped through a long period time while pass through the forming portion $\ell_1$ of the dies, so that the extruded product is enhanced in its orientation and provided with a strong meat-like structure.

As described above, each of the small openings 85a, 85b and 85c may also have other shapes in addition to the cylindrical shape, for example, a slit-like shape a gap of which is hereinafter referred to as a thickness T. In this case, the small openings form slits 101a, 101b and 101c.

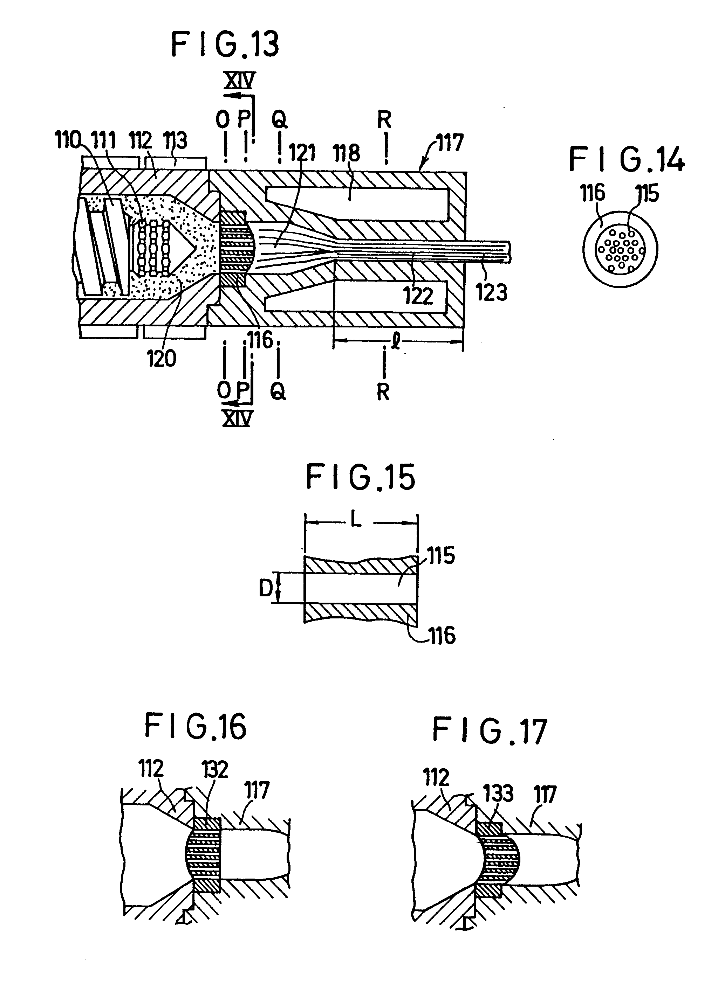

Next, a fifth example of the second embodiment of the present invention will be hereinbelow described. Figs. 13 to 15 show such fifth example, wherein: the reference numeral 110 designates a screw; the numeral 111 designates a torpedo; the numeral 112 designates a barrel; the numeral 113 designates a heater for heating the barrel 112; the numeral 116 designates a porous plate a central portion of which is thickest so that a thickness of the porous plate 116 is gradually decreased toward its periphery;

the numeral 115 designates a small opening a plurality of which are provided in the porous plate 116, so that a length of each of the small openings 115 is different from each other according to the thickness of the porous plate 116; the numeral 117 designates a die; the numeral 118 designates a jacket for receiving a die temperature controlling medium; the numeral 120 designates raw materials immediately after they passed through the screw 110; the numeral 121 designates raw materials immediately after they passed through the small openings 115; the numeral 122 designates raw materials passing through the forming portion $\ell$ of the die 117; and the numeral 123 designates an extruded food product (a shaped product).

In the die for the extruder shown in Figs. 13 and 14, the raw materials fed to a raw materisl feeding portion (not shown) of the screw 110 are compressed, mixed and kneaded between the screw 110 and the barrel 112 under the action of the screw 110 and then are stirred by the torpedo 111 provided in the front end of the screw 110 to be transferred to a front area of the barrel 112 in which the raw materials are designated by the referenc numeral 120. The barrel 112 is heated by the heater 113 to be controlled in its temperature by the same 113. In some cases, it is necessary to cool the raw materials so as to control their temperature with the use of a suitable cooling unit in place of the heater 113, which is dependent on the properties of the raw materials. If the starch starting materials are used as the raw materials, such raw materials are already fused together at a time when they are transferred forward by the screw 110. The fused condition of the raw materials is designated by the reference numeral 120. Consequently, such fused raw materials are cooled and solidified in the die 117, or bulked out at the outlet of the die 117, so that such raw materials are extruded from the die 117 as a food product. In this case, therefore, the provision of the small openings 115 is not required.

In contrast with this, in case that it is required to produce a fibriform meat-like organized food product from the raw materials, i.e., the vegetable protein such as the defatted soybean powder and the above-mentioned "Okara", and the animal proteins such as the scrap meat and the like, it is not possible to impart a strong fiber-like property to the food product even if the raw materials under the condition 120 are extruded from the die 117. However, according to the present invention, it is possible to produce a strong fibriform continuous meat-like product, because there is provided the porous plate 116 in the die 117, through which porous plate 116 extend a plurality of the small openings 115 in a direction of

-30-

the thickness of the porous plate 116 which varies in thickness in a radial direction thereof. Namely, the raw materials 120 existing in the vicinity of the front end portion of the screw 110 is in a condition in which the protein molecules of the raw materials bring their reactive elements to the surface thereof to some extent through kneading process of the raw materials conducted by the screw 110 etc., so that the raw materials are fused together while such protein molecules are in a condition in which they are not reacted together. Under such condition, when the raw materials are passed through the small openings 115 of the porous plate 116 of the present invention, the protein molecules of the raw materials bring further more amount of their reactive elements to the surfaces thereof in a condition designated by the reference numeral 121. In this condition, the raw materials are introduced into the forming portion (the length of which is designated by the reference character $\ell$ ) of the die 117 so that they are reacted and shaped so as to be oriented, whereby the fiber-like property is imparted to the extruded product, while such extruded product has a strong meat-like structure which is provided by organized bindings of the protein molecules based on the large amount of their exposed reactive elements.

Also, according to the present invention, the

-31-

following action is conducted in the forming portion of the die 117; in general, the flowing speed of the raw materials in the die 117 is high in the central portion of such flow, and low in the vicinity of the wall surface of flowing passage of such flow. In the conventional die of the extruder, since flowing speed of the raw materials decreases when the raw materials flow in the vicinity of the wall surface and thereby the flowing resistance thereof increases, once organized proteins of the raw materials existing in the die 117 are subjected to the exfoliating action in the flowing direction of the raw materials, which exfoliating action is caused by the difference in the flowing speed, so that their once organized structure is broken, whereby they are extruded from the outlet of the die 117 in a condition in which their structure has been torn. In order to prevent such structure from being broken, it is necessary to minimize the difference in the flowing speed of the raw materials in the die 117. With this respect, in the embodiments of the present invention, such difference in the flowing speed of the raw materials is minimized with provision of the porous plate 116 provided with a plurality of the small openings 115 which very in length with each other.

For example, in a case as shown in Fig. 13, the length of the small opening 115 disposed in the central portion of the porous plate 116 is longer than that disposed in the peripheral portion of the porous plate 116. In general, a flowing speed of a fluid flowing through a fluid passage decreases when a flowing resistance increases. Since such flowing resistance is produced by a friction (in a broad sense) between the fluid and the wall surface of the fluid passage, the flowing resistance in the small opening is proportional to the length of such small opening, provided that a size of a cross section of the small opening is fixed. In other words, the flowing speed at the outlet of the small opening decreases when the length of the small opening increases. The raw materials flow into each of the small openings 115 in a portion O-O as shown in Fig. 13 under a condition in which there is substantially no difference in the flowing speed of the raw materials, and then pass through the outlet of each of the small openings 115, or a portion P-P in which the flowing speed of the raw materials in the central portion of the porous plate 116 is small while the flowing speed of the raw materials in the vicinity of the peripheral portion of the porous plate 116 is large.

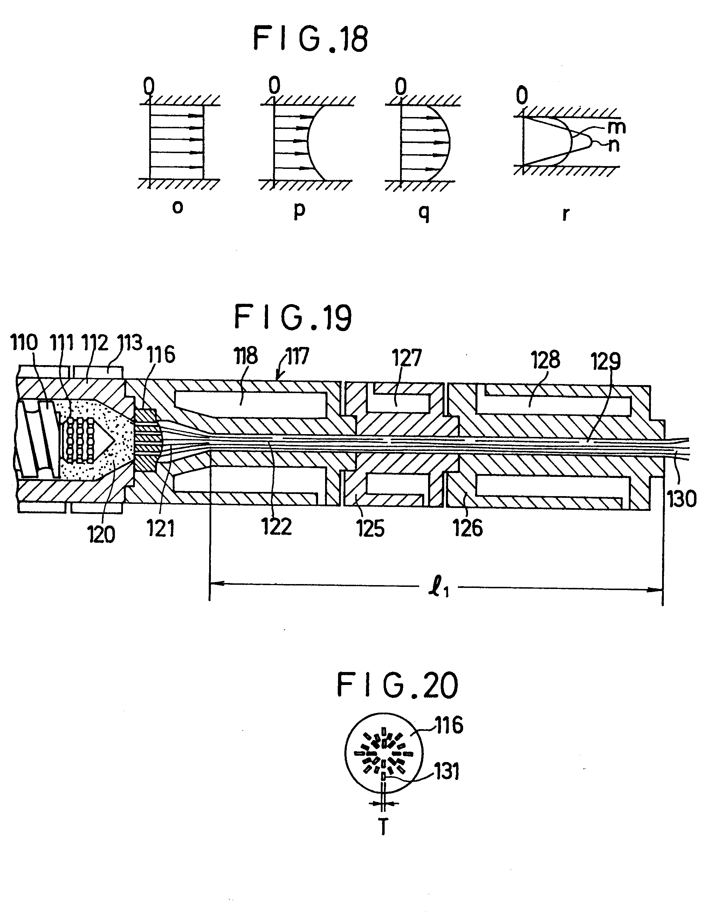

Consequently, it is possible to minimize the difference in the flowing speed of the raw materials, i.e., to smooth the flowing speed distrubution of the raw materials in the die 117 by increasing the flowing speed of the raw materials in the vicinity of the peripheral portion of the porous plate 116 while the flowing speed of the raw materials in the central portion of the porous plate 116 is decreased, because the flowing speed of the raw materials in the vicinity of the wall surface of the die 117 in a down-stream side of the porous plate 116, i.e., in a portion Q-Q is decreased by the flowing resistance due to such wall surface of the die 117. The flowing speed distribution of the raw materials in the portions O-O, P-P, Q-Q and R-R in Fig. 13 are shown in Fig. 18 o, p, q and r, respectively. The flowing speed distribution n of the raw materials in the portion R-R in Fig. 13 is in the conventional case, while the flowing speed distribution m of the raw materials in the same portion R-R is in the case of the present invention.

Under the effect of the orienting action and the smoothing action of the flowing speed distribution both of which are produced by the provision of the porous plate 116, it is possible to produce a continuous meat-like food product having a strong fiber-like property and a strongly bound structure in an extrusion manner. Namely, the fused raw materials (the protein starting materials), which have passed through each of the small openings 115 of the porous plate 116 and introduced into the forming portion of the die 117, are subjected to the shearing action caused

-34-

by a large flowing speed of the raw materials so that they are oriented in the flowing direction thereof. Under the effect of such orientation of the raw materials, a large amount of the reactive elements of the raw materials is exposed, which reactive elements enhance the structural binding of the extruded food product. If there is a difference in the flowing speed of the raw materials flowing through the forming portion of the die 117, such raw materials are subjected to the exfoliating action in the flowing direction of the raw materials so that the structure of the food product is broken. In the die for the extruder of the present invention, the raw materials, which flow in the vicinity of a wall surface of the barrel 112 so that their flowing speed is small due to a large flowing resistance caused by such wall surface, is introduced into the small opening 115 having a short length, which small opening 115 penetrates a thin portion of the porous plate 116, while the raw materials which flow in a central portion of the barrel 112 so that their flowing speed is large due to a small flowing resistance is introduced into the small opening 115 having a long length, which small opening 115 penetrates a thick portion of the porous plate 116. As a result, when these raw materials flow through the forming portion of the die 117, there is substantially no difference in the flowing speed of the raw materials, so that it is possible to produce the meat-like food product having a strong fiber-like property and a high structural binding, in an extrusion manner.

Incidentally, in Fig. 13, though the porous plate 116 provided with the small openings 115 is incorporated in the die 117, it is also possible to provide such porous plate 116 in the barrel's side. Further, in addition to the one shaft type extruder provided with one screw 110, it is also possible to employ the two shaft type extruder provided with two screws. Further, the shape of the porous plate 116 is not limited to one shown in the drawings. For example, as shown in Fig. 16, it is possible to use a porous plate 132 in place of the porous plate 116, which porous plate 132 is provided with a convex portion in its central portion opposite to an end of the barrel 112, or as shown in Fig. 17, it is possible to use a porous plate 133 in place of the porous plate 116, which porous plate 133 is provided with a concave portion in its central portion opposite to the end of the barrel 112 so that the thickness of such porous plate 133 gradually decreases radially from its central portion to its peripheral portion. In this case, if it is possible to change the flowing speed distribution of the raw materials in the die 117, it is not required to elongate the length of the small opening 115 in the central portion of the porous plate (116, 132, 133).

Further, according to the properties of the food raw materials and the intended food product, it is necessary to change the small openings 115 in their shapes, sizes and numbers, wherein it is preferable to make each of the small openings 115 smaller in its diameter, longer in its length and to increase the numbers of the small openings 115 to the extent that the pressure drop across the small openings 115 enables the food product to be extruded.

As shown in Fig. 15, according to the experiments, in case that the defatted soybean powder is used as a raw materials, it is preferable to use the small opening 115 having a ratio (L/D) of the diameter D of the small opening 115 to the length L of the same 115 within a range of from 3 to 20 so as to keep an average flowing speed of the raw materials within a range of from 3 to 10 cm/sec.

Further, Fig. 19 shows a fifth example of the second embodiment of the present invention, wherein: the reference numerals 125, 126 designate dies; the numerals 127, 128 designate temperture controlling jackets; the reference character $\ell_1$ designates a length of the forming portion of the dies, which length is 15 to 40 times as long as the diameter of the die opening 129. The protein molecules of the raw materials under a condition 121 are

-37-

subjected to the reacting action and the shaping action throuth a longer period of time than that in the case of the example shown in Figs. 13 and 14 while they pass through the above forming portion of the dies, so that the strong meat-like product 130 having been more oriented in its structure is produced in an extrusion manner. Incidentally, in addition to the circular shape in its cross section, for example, the small opening 115 is also able to have a slit-like shape in its cross section as shown in Fig. 20 in which the reference character T designates a width of the slit 131.

The above is all the description of the embodiments of the present invention. Naturally, the scope of the present invention is not limited to such embodiments only, and it is possible to modify such embodiments without departing from the spirit of the present invention.

### Field of the industrial use of the Invention

As described above, the die of the present invention is most suitable for use in the extruder in an extrusion production of the continuous organized food product from the raw materials, particularly from the protein starting material.

What is claimed is:

1. A die for an extruder comprising: a sleeve-like cylinder barrel; a screw rotatably provided in said cylinder barrel; and a die opening provided in a front end of said cylinder barrel; characterized in that:

a length of said die opening is 15 to 40 times as long as a diameter of said die opening or 15 to 40 as long as a thickness of said die opening.

2. The die for the extruder as set forth in claim 1, wherein:

a cross sectional shape of said die opening is substantially not changed between an inlet of said die opening and an outlet of said die opening.

3. A die for an extruder comprising: a sleeve-like cylinder barrel; a screw rotatably provided in said cylinder barrel; and a die opening provided in a front end of said cylinder barrel; characterized in that:

a porous plate provided with a plurality of small openings in a thickness direction of said porous plate is provided in an inlet portion of said die opening so as to be disposed in a position perpendicular to an axis of said screw.

4. The die for the extruder as set forth in claim 3, wherein:

a ratio of a diameter or a thickness of said small opening of said porous plate to a length of said small opening of said porous plate is within a range of from 3 to 20.

5. The die for the extruder as set forth in claim 3, wherein:

a flowing speed distribution of raw materials in said die opening is smoothed as best it can by varying a length of each of said small openings of said porous plate.

6. The die for the extruder as set forth in claim 5, wherein:

said length of each of said small openings of said porous plate is varied so as to be most elongated in a central portion of said porous plate and most shortened in a peripheral portion of said porous plate.

7. The die for the extruder as set forth in claim 3, wherein:

a flowing speed distribution of raw materials in said die opening is smoothed as best it can by varying a cross sectional shape and/or a size of a cross sectional area of each of said small openings of said porous plate.

8. The die for the extruder as set forth in claim 7, wherein:

said size of said cross sectional area of said each of said small openings of said porous plate is varied so as to be minimized in a central portion of said porous

-40-

plate and maximized in a peripheral portion of said porous plate.

# FIG.1

# FIG.2

# FIG.3

# FIG.4

L

D

55

56

# FIG.6

56

71

T

# FIG.5

50 51 52 53 56    58    57    67        68   69

60    61    62   65    66    70

$\ell_1$

# F I G.7

80 81 82 83 F G H 91 88 J 87

90 85a,b,c 86 92 93

F G H J

ℓ

# F I G.8

86

85a Da Db
85b Dc
85c

L

# F I G.9

85a
85b
85c
86

# FIG.10

# FIG.11

# FIG.12

# F I G.13

# F I G.14

# F I G.15

# F I G.16

# F I G.17

0213204

## FIG.18

o    p    q    r

## FIG.19

110 111 112 113 116    118  117    127    128 129

120  121   122  125  126    130

$\ell_1$

## FIG.20

116

131

T

FIG.21  FIG.22  0213204

FIG.23  FIG.24

FIG.25  FIG.26

FIG.27  FIG.28

# INTERNATIONAL SEARCH REPORT

International Application No. PCT/JP85/00287

## I. CLASSIFICATION OF SUBJECT MATTER (if several classification symbols apply, indicate all) [3]

According to International Patent Classification (IPC) or to both National Classification and IPC

Int. Cl$^4$ A23J 3/00, A23P 1/12 // A23L 1/325

## II. FIELDS SEARCHED

| Minimum Documentation Searched [4] | |
|---|---|
| Classification System | Classification Symbols |
| IPC | A23J 3/00, A23P 1/12, A23L 1/325, A23L 1/31 |

Documentation Searched other than Minimum Documentation
to the Extent that such Documents are included in the Fields Searched [5]

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| X | JP, B, 55-45178 (Unilever Naamloze Vennootschap) 17 November 1980 (17. 11. 80) & CA, A, 944607 & AT, B, 315625 & SE, B, 372694 & DE, B2, 2128463 & IT, A, 1036043 & NL, B, 168693 | 1 - 4 |
| Y | JP, A, 50-29773 (Nippon Griffith Laboratories Kabushiki Kaisha) 25 March 1975 (25. 03. 75) & DE, A1, 2343830 & BE, A2, 817284 & NL, A, 7409180 & AU, A1, 5939073 & US, A, 3904769 & GB, A, 1439983 & IT, A, 1016296 & CA, A1, 1019620 | 1 - 4 |
| Y | JP, A, 52-38056 (The Nisshin Oil Mills, Ltd.) 24 March 1977 (24. 03. 77) (Family : none) | 1 - 4 |

* Special categories of cited documents: [15]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search [2] | Date of Mailing of this International Search Report [2] |
|---|---|
| August 12, 1985 (12. 08. 85) | August 19, 1985 (19. 08. 85) |
| International Searching Authority [1] | Signature of Authorized Officer [10] |
| Japanese Patent Office | |

Form PCT/ISA/210 (second sheet) (October 1981)